# EUROPÄISCHE PATENTSCHRIFT

(11) **EP 0 544 929 B1**
(45) Veröffentlichungstag und Bekanntmachung des Hinweises auf die Patenterteilung: **12.04.1995**
(21) Anmeldenummer: 91120522.7
(22) Anmeldetag: 29.11.1991
(51) Int. Cl.: H02K 1/17

(54) **Anordnung zur Fixierung von Magnetschalen in einem Motorgehäuse**
Arrangement for fixing magnet shells into a motor casing
Dispositif pour fixer les coquilles d'aimant dans un corps de moteur

(43) Veröffentlichungstag der Anmeldung: 09.06.1993
(73) Patentinhaber: SIEMENS AKTIENGESELLSCHAFT, 80333 München (DE)
(72) Erfinder: Hartel, Gerd Fritz, Dipl.-Ing., W-8700 Würzburg (DE)

(56) Entgegenhaltungen:
- EP-A- 0 144 004
- EP-A- 0 154 335
- FR-A- 2 080 419

## Beschreibung

Die Erfindung bezieht sich auf eine Anordnung zur Fixierung von Magnetschalen in einem Motorgehäuse gemäß Oberbegriff des Anspruchs 1; eine derartige Anordnung ist durch die EP-B1-0 307 709 bekannt.

Bei der bekannten Anordnung ist zur Fixierung zweier Magnetschalen am Innenumfang eines Motorgehäuses vorgesehen, zwischen den einen tangential benachbarten Stirnseiten der Magnetschalen eine diese gegen die Innenumfangsfläche andrückende Steckfeder einzubringen und zwischen die beiden anderen benachbarten Stirnseiten der Magnetschalen einen massiven, an den Stirnflächen der Magnetschalen andrückenden Kunststoffkörper axial einzuschieben, der zu seiner axialen Führung und formschlüssigen tangentialen Lagesicherung einer zu seiner einen axialen Vorderkante geöffnete axiale Führungsnut aufweist, in die beim axialen Einschieben des Kunststoffkörpers in die Pollücke zwischen den beiden Stirnseiten der Magnetschalen ein korrespondierender, radial einwärts in das Motorgehäuse geprägter Führungsnocken eingreift.

Eine demgegenüber konstruktiv und montagetechnisch einfachere und insbesondere auch gegen hohe Motor-Betriebstemperaturen wärmestabilere Anordnung zur Fixierung von Magnetschalen in einem Motorgehäuse kann ausgehend von einer Anordnung der eingangs genannten Art erfindungsgemäß durch die Lehre des Anspruchs 1 erreicht werden.

Eine besonders lagestabiles und leicht in die Pollücke zwischen den benachbarten Stirnseiten zweier Magnetschalen einführbares Fixierungs- bzw. Halterungsteil ist durch einen Blechbügel mit jeweils einem endseitigen und einem dazwischenliegenden geschlitzten ersten Bügelteil und jweils dazwischenliegenden zweiten Bügelteilen gegeben, wobei zweckmäßigerweise bei der weiteren konstruktiven Vereinfachung die zweiten Bügelteile ungeschlitzt bleiben. Eine besonders hohe Wärmestabilität ist gegeben, wenn der Blechbügel aus Aluminiumblech geformt ist.

Weiter vorteilhafte Ausgestaltungen der Erfindung sind jeweils Gegenstand der Unteransprüche.

Die erfindungsgemäße Anordnung erlaubt trotz des in vorteilhafter Weise als einfaches einstückiges Stanz-Biegeteil gefertigten leichten Blechbügels einerseits eine sichere geführte Fixierungsanlage relativ zum Motorgehäuse und andererseits einen sicheren Andruck an die Stirnseiten der an ihrem radial äußeren Rand aus fertigungstechnischen Gründen mit einer für eine tangentiale Fixierungs-Anlage unvorteilhaften Phase versehenen Magnetschalen, wobei im Vergleich zu einem massiven Kunststoffkörper eine höhere Wärmestabilität gewährleistet und im Vergleich zu einem massiven, insbesondere druckgegossenen, Metallkörper ein weniger kostenintensives und weniger toleranzbehaftetes Halterungs- bzw. Fixierungsteil gegeben ist.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einer stirnseitigen Draufsicht ein topfförmiges Motorgehäuse mit an dessen Innenumfangsfläche fixierten vier Magnetschalen;
- FIG 2: eine radiale Draufsicht auf eine erste Ausführung eines Blechbügel;
- FIG 3: den Blechbügel gemäß FIG 2 im Schnittverlauf II-II;
- FIG 4: die radiale Draufsicht auf eine zweite Ausführung eines Blechbügel;
- FIG 5: den Blechbügel gemäß FIG 4 im Schnittverlauf V-V;
- FIG 6: einen axialen Längsschnitt durch ein Motorgehäuse mit durch einen Blechbügel der ersten Ausführung gehalterte Magnetschalen gemäß Schnittverlauf VI-VI in FIG 1;
- FIG 7: einen axialen Längsschnitt durch ein Motorgehäuse mit durch einen Blechbügel der zweiten Ausführung gehaltere Magnetschalen.

An der Innenumfangsfläche eines topfförmigen Motorgehäuses 1 eines Kommutatormotors sind in gegenseitigem tangentialen Abstand vier Magnetschalen 4,5,6,7 angeordnet. Zwischen den einen tangentialen Stirnseiten der Magnetschalen 4;5 bzw. 6;7 sind gegen die Stirnseiten drückende Bügelfedern 8,9 axial derart eingedrückt, daß die anderen Stirnseiten der Magnetschalen gegen steife Blechbügel 2 bzw.3 angedrückt werden, die gegenüber dem Motorgehäuse 1 mittels aus diesem herausgeprägter radialer Fixiernocken 11 bzw.12 zumindest in Umfangsrichtung des Motorgehäuses 1 lagefixierbar sind.

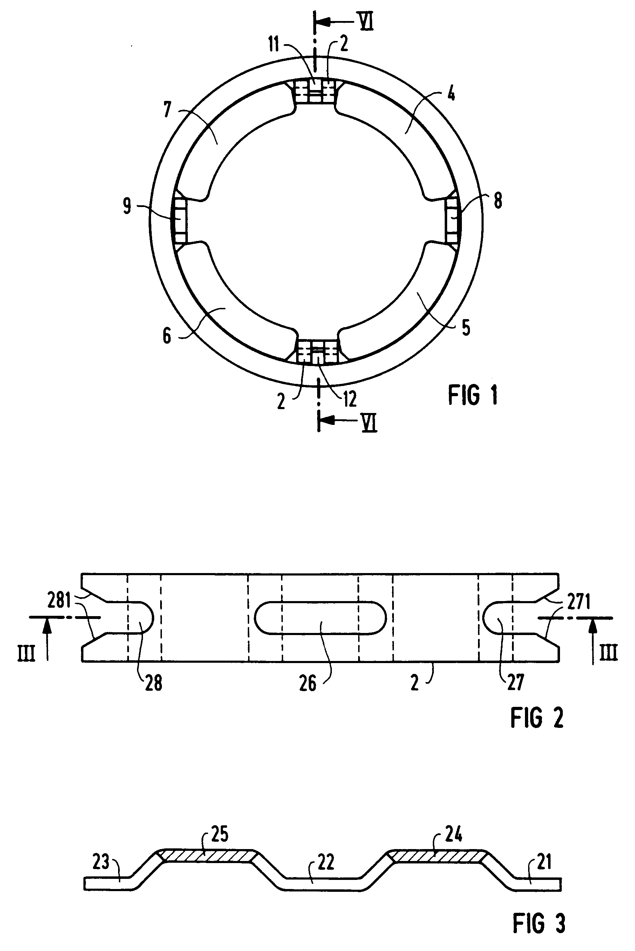

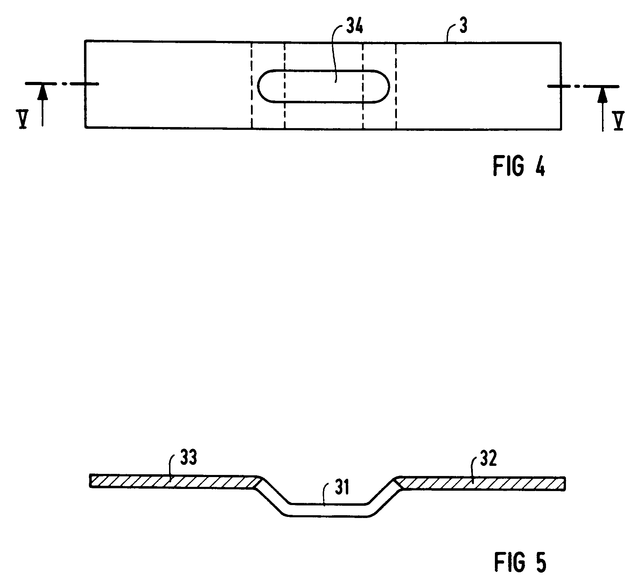

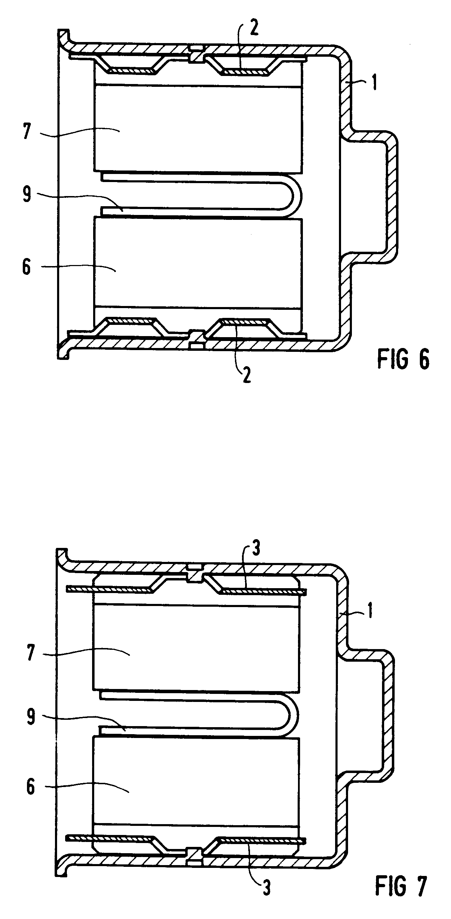

Die Blechbügel 2 bzw.3 sind gemäß vorteilhaften Ausgestaltungen der Erfindung entweder gemäß FIG 2,3,6 als Blechbügel 2 mit jeweils einem endseitigen und einem dazwischenliegenden durch Endschlitze 27;28 bzw. einen Mittelschlitz 26 längsgeschlitzten ersten Bügelteil 22;23 bzw.21 und jeweils dazwischenliegenden zweiten Bügelteilen 24;25 oder gemäß FIG 4,5,7 als Blechbügel 3 mit einem axial mittigen, durch einen Mittelschlitz 33 längsgeschlitzten ersten Bügelteil 31 und zwei axial endseitigen ungeschlitzten zweiten Bügelteilen 32;33 ausgebildet.

Durch die derartige Gestaltung der Blechbügel 2 bzw.3 ist es einerseits möglich, diese unter Beanspruchung eines minimalen Handhabungsraums axial geführt in die Pollücken zwischen den Stirnseiten der Magnetschalen 4;5;6;7 bei seitlicher Umgreifung der Fixiernocken 11 bzw.12 geführt einzuschieben und andererseits eine sichere Anlage an den Stirnseiten der Magnetschalen 4;5;6;7 unterhalb ihrer motorgehäuseseitigen Randanphasungen zu gewährleisten.

Beim axialen Einschieben der Blechbügel 2 bzw.3 in die Pollücken werden die Blechbügel zunächst dadurch geführt, daß die Fixiernocken 11 bzw.12 in entsprechende endseitige Endschlitze 27 bzw.28 des Blechbügels 2 im Sinne einer schienenartigen Führung eingreifen, beim weiteren axialen Einschieben die ungeschlitzten zweiten Bügelteile 24 bzw.25 radial unterhalb der Fixiernocken 11 bzw. 12 gleiten und vor Erreichen der Betriebsendlage die Fixiernocken 11 bzw.12 in den Mittelschlitz 26 eines mittigen weiteren ersten Bügelteils des Blechbügels 2 eingreifen. Zur einfacheren Einfädelung der Endschlitze 27 bzw.28 relativ zu den Fixiernocken 11 bzw.12 sind die Endschlitze 27 bzw.28 mit trichterförmigen Erweiterungen 271 bzw.281 versehen.

In ähnlicher Weise wie zuvor anhand von FIG 2,3 beschrieben erfolgt auch eine geführte Fixierung des Blechbügels 2 relativ zum Motorgehäuse und eine sichere stirnseitige Anlage an den Magnetschalen 4,5,6,7 durch einen Mittelschlitz 34 im ersten Bügelteil 31 und die tiefergebogenen zweiten Bügelteile 32;33, die ungeschlitzt sind und unterhalb der Fixiernocken 11,12 axial einschiebbar sind.

In vorteilhafter Weise sind die derart auf engstem Raum montierbaren Blechbügel einerseits geführt durch die entlang der Fiexiernocken gleitenden Schlitze positionierbar sowie in ihrer Betriebsendlage zumindest in Umfangsrichtung zum Motorgehäuse formschlüssig fixierbar und andererseits an die im wesentlichen radial verlaufenden großflächigen Stirnseiten der Magnetschalen ohne Gefahr einer großen Toleranzstreuung andrückbar.

## Patentansprüche

1. Anordnung zur Fixierung von Magnetschalen (4;5;6;7) in einem Motorgehäuse (1) mit zwischen tangentialen Stirnseiten benachbarter Magnetschalen (4;7 bzw. 5;6) einschiebbaren und an diese andrückenden Halterungsteilen, die mit Schlitzen radiale Motorgehäuse-Vorsprünge (11;12) seitlich umgreifen, **dadurch gekennzeichnet,** daß als Halterungsteile axial einschiebbare Blechbügel (2 bzw.3) mit zumindest einem radial hochgebogenen und mit einem Längsschlitz (26;34) die Motorgehäuse-Vorsprünge (11;12) seitlich umgreifenden ersten Bügelteil (21-23 bzw.31), dessen Längsschlitz in Einschieberichtung des Blechbügels (2bzw.3) offen ist, und zumindest einem radial tiefergebogenen, die Motorgehäuse-Vorsprünge (11;12) untergreifenden, an den Stirnseiten der Magnetschalen (4;5;6;7) anliegenden zweiten Bügelteil (24;25 bzw.32;33) vorgesehen sind, welcher beim axialen Einschieben des Blechbügels radial unterhalb der Motorgehäuse-Vorsprünge (11;12) gleitet.

2. Anordnung nach Anspruch 1, **dadurch gekennzeichnet,** daß die Blechbügel (3) mit einem axial mittig geschlitzten ersten Bügelteil (31) und zwei axial endseitigen zweiten Bügelteilen (32;33) versehen sind.

3. Anordnung nach Anspruch 2, **dadurch gekennzeichnet,** daß die zweiten Bügelteile (32;33) ungeschlitzt sind.

4. Anordnung nach Anspruch 1, **dadurch gekennzeichnet,** daß die Blechbügel (2) mit zwei endseitigen Bügelteilen (21;23) und einem dazwischenliegenden geschlitzten ersten Bügelteil (22) sowie zwischen diesem und den endseitigen Bügelteilen jeweils liegenden zweiten Bügelteilen (24;25) versehen sind.

5. Anordnung nach Anspruch 4, **dadurch gekennzeichnet,** daß die zweiten Bügelteile (24;25) ungeschlitzt sind.

6. Anordnung nach einem der Ansprüche 1-5, **dadurch** **gekennzeichnet**, daß die Blechbügel (2 bzw.3) in Form einstückiger Stanz-Biegeteile ausgebildet sind.

7. Anordnung nach Anspruch 6, **dadurch gekennzeichnet,** daß die Blechbügel (2 bzw.3) aus Aluminiumblech geformt sind.

8. Anordnung nach einem der Ansprüche 1-7, **dadurch** **gekennzeichnet**, daß die ersten Bügelteile (21-23 bzw.31) der Blechbügel (2 bzw.3) an der Innenumfangsfläche des Motorgehäuses (1) anliegen.

9. Anordnung nach einem der Ansprüche 4-8, **dadurch** **gekennzeichnet**, daß die Schlitze (27;28) der endseitigen Bügelteile (21;23) endseitige trichterförmige Einführungs-Erweiterungen (271;281) für die anlaufenden Motorgehäuse-Vorsprünge (11;12) aufweisen.

10. Anordnung nach einem der Ansprüche 1-9, **dadurch gekennzeichnet,** daß die Motorgehäuse-Vorsprünge als aus dem Motorgehäuse (1) nach radial innen geprägte Fixiernocken (11;12) ausgeführt sind.

## Claims

1. Arrangement for securing magnetic shells (4;5;6;7) in a motor housing (1), having mounting parts which can be inserted between tangential end faces of neighbouring magnetic shells (4;7 and 5;6, respectively) and press against these and which laterally engage with slots around radial motor housing projections (11;12), characterized in that there are provided as mounting parts sheet-metal brackets (2 and 3, respectively) which can be inserted axially and have at least one first bracket part (21-23 and 31, respectively) which is bent upwards radially and engages with a longitudinal slot (26;34) laterally around the motor housing projections (11;12), the longitudinal slot of which first bracket part is open in the insertion direction of the sheet-metal bracket (2 and 3, respectively), and at least one second bracket part (24;25 and 32;33, respectively) which is bent downwards radially, engages under the motor housing projections (11;12), rests on the end faces of the magnetic shells (4;5;6;7) and which second bracket part, during axial insertion of the sheet-metal bracket slides radially below the motor housing projections (11;12).

2. Arrangement according to Claim 1, characterized in that the sheet-metal brackets (3) are provided with an axially centrally slotted first bracket part (31) and two second bracket parts (32;33) at its axial end.

3. Arrangement according to Claim 2, characterized in that the second bracket parts (32;33) are unslotted.

4. Arrangement according to Claim 1, characterized in that the sheet-metal brackets (2) are provided with two bracket parts (21;23) at the end and an intermediate slotted first bracket part (22) as well as second bracket parts (24;25) which in each case lie between said first bracket part and the bracket parts at the end.

5. Arrangement according to Claim 4, characterized in that the second bracket parts (24;25) are unslotted.

6. Arrangement according to one of Claims 1-5, characterized in that the sheet-metal brackets (2 and 3, respectively) are constructed in the form of integral stamped and bent parts.

7. Arrangement according to Claim 6, characterized in that the sheet-metal brackets (2 and 3, respectively) are formed from aluminium sheet-metal.

8. Arrangement according to one of Claims 1-7, characterized in that the first bracket parts (21-23 and 31, respectively) of the sheet-metal brackets (2 and 3, respectively) rest on the internal circumferential surface of the motor housing (1).

9. Arrangement according to one of Claims 4-8, characterized in that the slots (27;28) of the bracket parts (21;23) at the end have funnel-shaped insertion widenings (271;281) at the end for the incoming motor housing projections (11;12).

10. Arrangement according to one of Claims 1-9, characterized in that the motor housing projections are constructed as securing cams (11;12) which are stamped radially inwardly from the motor housing (1).

## Revendications

1. Dispositif pour fixer des coques magnétiques (4;5;6;7) dans une carcasse de moteur (1) comportant des éléments de fixation, qui peuvent être insérés entre des faces frontales tangentielles de coques magnétiques voisines (4;7 ou 5;6) et s'appliquent avec serrage contre ces coques et qui entourent, par des fentes, des parties saillantes radiales (11;12) de la carcasse du moteur, caractérisé par le fait que comme élément de fixation, il est prévu des étriers en tôle (2 ou 3), qui peuvent être insérés axialement et comportent au moins une première partie (21-23 ou 31), qui est surélevée radialement et entoure latéralement les parties saillantes (11;12) de la carcasse du moteur, par une fente longitudinale (26;34) et dont la fente longitudinale est ouverte dans la direction d'insertion de l'étrier en tôle (2 ou 3), et par au moins une seconde partie (24;25 ou 32;33), qui est coudée radialement en retrait, s'engage au-dessous des parties saillantes (11;12) de la carcasse du moteur, s'applique contre les faces frontales des coques magnétiques (4;5;6;7) et y glisse radialement au-dessous des parties saillantes (11;12) de la carcasse du moteur, lors de l'insertion axiale de l'étrier en tôle.

2. Dispositif suivant la revendication 1, caractérisé par le fait que les étriers en tôle (3) sont pourvus d'une première partie (31), qui est fendue axialement en son centre, et de deux secondes parties (32;33) situées aux extrémités axiales.

3. Dispositif suivant la revendication 2, caractérisé par le fait que les secondes parties (32;33) des étriers ne sont pas fendues.

4. Dispositif suivant la revendication 1, caractérisé par le fait que les étriers en tôle (2) sont pourvus de parties d'extrémité (21;23) et d'une première partie intercalaire fendue (22) ainsi que de secondes parties (24;25) qui sont situées respectivement entre cette première partie et la partie d'extrémité de l'étrier.

5. Dispositif suivant la revendication 4, caractérisé par le fait que les secondes parties (24;25) de l'étrier ne sont pas fendues.

6. Dispositif suivant l'une des revendications 1-5, caractérisé par le fait que les étriers en tôle (2 ou 3) sont réalisés sous la forme de pièces monobloc découpées et pliées.

7. Dispositif suivant la revendication 6, caractérisé par le fait que les étriers en tôle (2 ou 3) sont formés d'une tôle d'aluminium.

8. Dispositif suivant l'une des revendications 1-7, caractérisé par le fait que les premières parties (21-23 ou 31) des étriers en tôle (2 ou 3) s'appliquent sur la surface périphérique intérieure de la carcasse (1) du moteur.

9. Dispositif suivant l'une des revendications 4-8, caractérisé par le fait que les fentes (27;28) des parties d'extrémité (21;23) des étriers possèdent des élargissements terminaux d'introduction (271;281) en forme d'entonnoirs, pour les parties saillantes d'attaque (11;12) de la carcasse du moteur.

10. Dispositif suivant l'une des revendications 1-9, caractérisé par le fait que les parties saillantes de la carcasse du moteur sont réalisées sous la forme de cames de fixation (11;12) qui s'étendent radialement vers l'intérieur à partir de la carcasse (1) du moteur.
